# FASCICULE DE BREVET EUROPEEN

(11) **EP 1 338 474 B1**
(45) Date de publication et mention de la délivrance du brevet: **13.09.2006**
(21) Numéro de dépôt: 03356023.6
(22) Date de dépôt: 13.02.2003
(51) Int. Cl.: B60R 9/055

(54) **Dispositif de fixation d'un coffre de toit de véhicule sur un support**
Kraftfahrzeug-Dachkoffer-Befestigungsvorrichtung an einem Gestell
Attaching system for a vehicle roof box to a frame

(30) Priorité: 26.02.2002 FR 0202423
(43) Date de publication de la demande: 27.08.2003
(73) Titulaire: Bertucat Industrie, 01700 Miribel (FR)
(72) Inventeur: Seys, Jean-Marc, 69270 Fontaines Saint Martin (FR)
(74) Mandataire: Vuillermoz, Bruno

(56) Documents cités:
- EP-A- 0 777 057
- WO-A-97/11865
- DE-C- 19 509 754
- US-A- 4 381 070
- US-A- 4 501 384

## Description

La présente invention se rapporte au domaine technique des accessoires pour véhicules, motos ou cyclomoteurs, et notamment des coffres destinés à être montés, de façon amovible, sur le toit d'un véhicule. De tels coffres peuvent être ouverts ou fermés par un couvercle.

De tels coffres sont en général constitués d'une demi-coque inférieure fixée sur le toit d'un véhicule, et d'une demi-coque supérieure formant couvercle, rapportée sur ladite demi-coque inférieure. Des moyens de maintien sont prévus entre les demi-coques de manières à éviter une désolidarisation, notamment sous l'effet d'efforts importants liés par exemple à un freinage brusque du véhicule ou à la résistance de l'air lors du déplacement du véhicule.

La demi-coque inférieure est fixée sur le toit d'un véhicule ou d'une voiture, à l'aide de moyens de fixation qui doivent eux aussi résister aux contraintes précédemment évoquées.

Le document DE-3817470 décrit des moyens de fixation d'un coffre sur des traverses, elles-mêmes montées sur le toit d'un véhicule.

Ces moyens de fixation comprennent deux boulons traversant le fond du coffre avec leur partie filetée, une plaque de liaison reliant les extrémités des boulons au voisinage de leur tête, au moins une plaque d'appui, engagée sur les parties filetées et des écrous vissés sur lesdites parties filetées pour solidariser le fond du coffre avec les traverses.

Lors du serrage des écrous, les traverses sont enserrées verticalement entre le fond du coffre et la plaque de liaison, laquelle réalise avec les boulons une pièce en U.

Les moyens de fixation décrits ne semblent pas être en mesure de s'adapter à des écartements variables des traverses, lorsque l'on passe d'un véhicule à un autre, sans procéder à des perçages spécifiques ou supplémentaires dans le fond du coffre.

En outre, les moyens de fixation ne permettent pas d'absorber le jeu mécanique horizontal entre les traverses et les boulons.

Chaque moyen de fixation (il y en a quatre en général) comprend ainsi un ensemble de pièces qu'il faut désassembler et assembler pour monter le coffre sur le toit du véhicule. Les mêmes opérations doivent être répétées pour démonter le coffre du toit, ce qui est à chaque fois très coûteux en temps.

Le document EP-0754 595 décrit un autre dispositif de fixation d'un coffre sur le toit d'un véhicule, équipé de traverses sur son toit.

Le dispositif de fixation comprend une pièce en U dont le déplacement vertical vient enserrer verticalement les traverses. Le positionnement de la pièce en U, est assuré par une dentelure extérieure de ses branches montantes sur lesquelles viennent s'engager des mâchoires de serrage actionnées par un levier.

Le dispositif de fixation ne permet pas de rattraper le jeu mécanique horizontal entre une traverse et une pièce en U. Il peut arriver en outre qu'un dispositif de fixation se trouve verrouillé, c'est-à-dire que la pièce en U se trouve immobilisée, avant même que le jeu vertical ne soit supprimé. Il n'y a alors pas de fixation fiable et sécurisée sur les traverses. En outre, les moyens de fixation sont réalisés avec des pièces compliquées nécessitant des usinages spécifiques, augmentant ainsi substantiellement les coûts de fabrication. Les pièces en U doivent par ailleurs être dégagées entièrement des autres éléments du dispositif de fixation, avant de les engager à nouveau dans lesdits éléments, pour leur positionnement correct vis à vis de la traverse correspondante. Toutes ces manipulations sont longues et fatigantes.

Le document EP-A-0 777 057 décrit un dispositif de fixation d'un accessoire sur un élément tubulaire de section rectangulaire selon le préambule de la revendication 1. Ce dispositif de fixation comporte une paire de mors monté pivotant sur un élément de pression en forme de U inversé. L'élément de pression comporte un trou traversant destiné à recevoir une tige filetée dont la tête prend appui contre la face intérieure des mors et dont l'extrémité libre comporte une molette de serrage. Chacun des mors comporte sur sa face supérieure une surface inclinée destinée à coopérer avec les bords de l'élément de pression lors d'un serrage de la molette de serrage, permettant ainsi un rapprochement latéral des mors pour enserrer l'élément tubulaire, un léger mouvement vertical ayant lieu en fin de rapprochement latéral des mors.

Le but de la présente invention vise à remédier aux inconvénients de l'état de la technique, et réaliser des dispositifs de fixation, simples, dont la mise en oeuvre est extrêmement rapide.

Un autre but de la présente invention vise à réaliser des dispositifs de fixation dont le prix de revient est faible, tout en garantissant une fixation mécanique du coffre adaptée aux efforts subis par ledit coffre.

A cette effet, l'invention concerne un dispositif de fixation d'un accessoire ayant les caractéristiques de la revendication 1.

Selon un mode de réalisation du dispositif conforme à l'invention, les moyens d'actionnement comprennent :
- une pièce d'entraînement pourvue d'un filetage extérieur et sur laquelle est montée l'autre extrémité des tiges de liaison, ladite pièce d'entraînement étant mobile en translation selon une direction sensiblement orthogonale par rapport.au corps de montage,
- une tige de maintien retenant l'organe de serrage sur le corps de montage, traversant la pièce d'entraînement et bloquant cette dernière en rotation, ledit organe de serrage étant monté mobile en rotation sur ladite tige de maintien,
- et un taraudage ménagé dans l'organe de serrage et engagé sur le filetage extérieur de la pièce d'entraînement de manière à faire coulisser cette dernière le long de la tige de maintien lors d'une rotation de l'organe de serrage.

Selon un mode de réalisation du dispositif conforme à l'invention, les moyens d'actionnement complémentaires comprennent :
- des passages coudés ménagés dans le corps de montage et traversés par les tiges de liaison,
- et des portions intermédiaires coudées des tiges de liaison, coopérant avec les passages coudés, de manière à entraîner un rapprochement ou un écartement desdites tiges de liaison, en fonction de la position de la pièce d'entraînement.

Selon un mode de réalisation du dispositif conforme à l'invention, l'organe de serrage est un bouchon taraudé.

Selon un mode de réalisation du dispositif conforme à l'invention, l'accessoire est un fond d'une demi-coque inférieure d'un coffre pour véhicule.

Selon un mode de réalisation du dispositif conforme à l'invention, les crochets sont destinés à venir en prise sur des barres transversales solidaires d'un toit de véhicule.

Selon un mode de réalisation du dispositif conforme à l'invention, le coffre destiné à être fixé sur le toit d'un véhicule pourvu de barres transversales, comporte une demi-coque inférieure dont le fond est équipé d'au moins deux dispositifs de fixation.

Selon un mode de réalisation du dispositif conforme à l'invention, le coffre destiné à être fixé sur le châssis d'un deux-roues, du type moto ou cyclomoteur, comporte une demi-coque inférieure dont le fond est équipé d'au moins deux dispositifs de fixation.

Selon un mode de réalisation du dispositif conforme à l'invention, chaque dispositif de fixation est susceptible, en position dite "desserrée", de coulisser le long de l'ouverture ménagée dans le fond, et peut être immobilisé, en position dite "serrée", sur ledit fond par un actionnement de l'organe de serrage.

L'avantage du dispositif de fixation conforme à l'invention réside dans la possibilité de l'utiliser dans diverses applications. Il peut en effet servir à fixer un coffre, ou un compartiment quelconque sur tout support et notamment sur un porte bagage d'un vélo ou d'une moto.

Le dispositif de fixation conforme à l'invention peut également être utilisé pour fixer un porte-vélo sur le toit d'un véhicule, ou pour fixer tout autre accessoire sur un support.

D'autres caractéristiques et avantages ressortiront également de la description détaillée donnée ci-après, en références aux dessins, annexés à titre d'exemples illustratifs et non limitatifs dans lesquels :
la **figure 1** est une vue éclatée en perspective du dispositif de fixation conforme à l'invention,
la **figure 2** est une vue latérale en coupe du dispositif conforme à l'invention en position ouverte,
la **figure 3** représente le dispositif de fixation de la figure 2 en position de serrage,
la **figure 4** est une coupe selon la ligne IV-IV en vue de dessus du dispositif de fixation de la figure 1,
la **figure 5** est une perspective du fond du coffre fixé sur des barres transversales à l'aide des moyens de fixation conformes à l'invention.

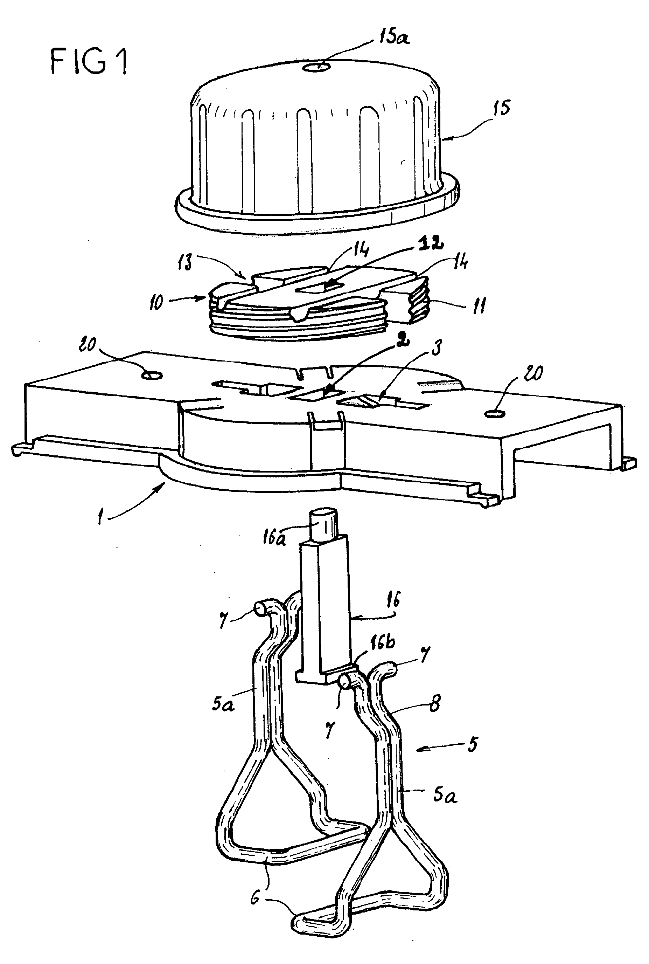

La figure 1 montre un dispositif de fixation conforme à l'invention selon une vue éclatée en perspective.

Le dispositif de fixation comprend un corps de montage 1 par exemple sous forme de pièce paralléllépipédique dans laquelle sont ménagés une ouverture centrale 2 et des passages coudés 3 ménagés de part et d'autre deladite ouverture centrale 2.

Le corps de montage 1 représenté à la figure 1 présente une forme sensiblement en U renversé destiné à prendre appui sur un support.

Le dispositif de fixation comprend également deux tiges de liaison 5 dont l'une des extrémités est pourvue d'un crochet 6 et dont l'autre extrémité 7 présente un moyen d'accrochage. La tige de liaison 5 présente également une partie intermédiaire 5a et une partie coudée 8 destinée à coopérer avec le passage coudé 3 respectif, l'autre extrémité 7 réalisant un moyen d'accrochage utilisé pour entraîner ladite tige de liaison 5 à travers le passage coudé 3 correspondant.

Tout autre association de formes entre les tiges de liaison 5 et les passages coudés 3 peut également à titre de variante être envisagée dans le cadre de la présente invention.

A titre d'exemple, les tiges de liaison 5 sont réalisées avec une tige métallique pleine de section cylindrique et dont les courbures forment respectivement les crochets 6, la partie intermédiaire 5a droite, la partie coudée 8 et le moyen d'accrochage sous forme d'extrémité recourbée 7.

Le dispositif de fixation comporte également une pièce d'entraînement 10 sensiblement cylindrique et pourvue d'un filetage extérieur 11. Un passage central 12 est ménagé dans la pièce d'entraînement 10 de même que des dégagements latéraux 13 débouchant sur des gorges d'appui 14 localisées de part et d'autre du passage central 12. Les dégagements 13 sont utilisés pour monter les tiges de liaison 5 sur la pièce d'entraînement 10 et plus précisément pour positionner les autres extrémités recourbées 7 de chaque tige de liaison 5 dans la gorge d'appui 14 respective.

Les dimensions et les formes des passages coudés 3 sont conçus pour permettre d'une part une translation des tiges de liaison 5 et d'autre part un pivotement desdites tiges de liaison 5 autour d'axes de pivotement matérialisés par les gorges d'appui 14. La traversée du passage coudé 3 de successivement la partie intermédiaire 5a et la partie coudée 8 est à l'origine de l'écartement et du rapprochement des crochets 6.

Le dispositif de fixation comprend également un organe de serrage 15 réalisé sous forme de bouchon taraudé monté libre en rotation sur le corps de montage 1. L'organe de serrage 15 présente un taraudage interne 15b engagé sur le filetage externe 11 de la pièce d'entraînement 10. L'organe de serrage 15 est maintenu contre le corps de montage 1 à l'aide d'une tige de montage 16. Cette dernière permet de retenir l'organe de serrage 15 tout en lui conférant la possibilité de tourner autour de son axe de symétrie. La tige de montage 16 présente à cet effet une extrémité cylindrique 16a s'engageant dans une ouverture circulaire 15a ménagée dans la partie supérieur de l'organe de serrage 15.

Différents moyens connus en tant que tels, par exemple une déformation de matière, sont prévus sur l'extrémité cylindrique 16a de la tige de montage 16 pour bloquer en translation ledit organe de serrage 15.

La tige de montage 16 est également pourvue d'un rebord 16b à son extrémité opposée à celle de la partie cylindrique 16a de manière à éviter qu'elle traverse l'ouverture centrale 2, ledit rebord 16b venant en appui sur le corps de montage 1.

La tige de montage 16, en dehors de ces deux extrémités, présente une section par exemple rectangulaire de manière à éviter toute rotation autour de son axe longitudinal correspondant également à son axe de montage sur le corps de montage 1 et dans l'organe de serrage 15.

Le passage central 12 présente avantageusement une forme rectangulaire complémentaire à celle de la tige de montage 16 de façon à être bloqué également en rotation avec cette dernière. On obtient ainsi par rotation de l'organe de serrage 15 et par l'intermédiaire de l'engagement du filetage extérieur 11 dans le taraudage 15b de l'organe de serrage 15 un déplacement en translation de la pièce d'entraînement 10, laquelle coulisse sur la tige de montage 16 et entraîne avec elle les tiges de liaison 5.

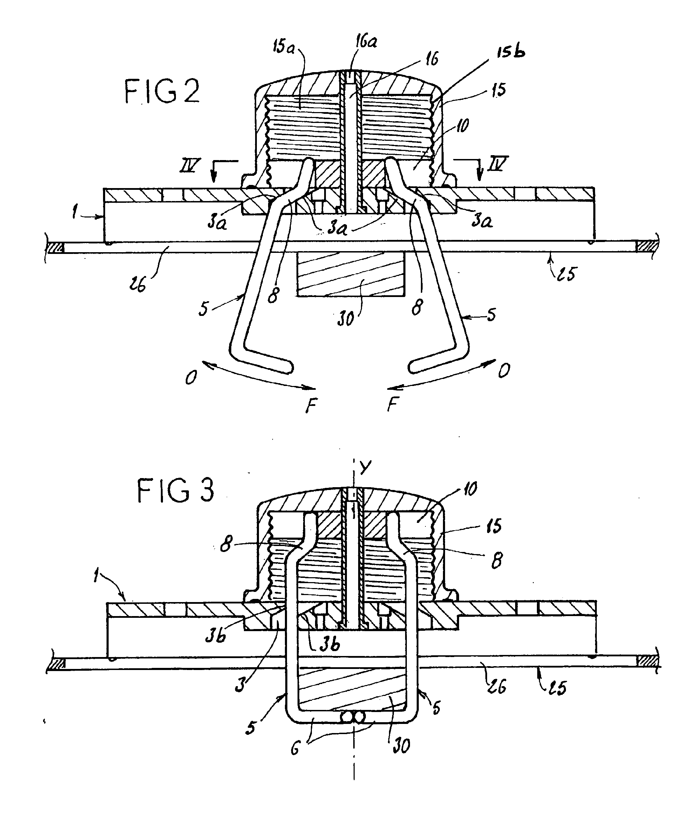

Les figures 2 et 3 montrent une coupe du dispositif de fixation conforme à l'invention en situation, c'est-à-dire dans une première position dite "ouverte" (figure 2) et dans une seconde position dite "fermée" (figure 3).

La figure 2 montre une coupe du dispositif de fixation conforme à l'invention. Dans ce dernier, la pièce d'entraînement 10 est en appui sur la surface supérieure du corps de montage 1 et les tiges de liaison 5 sont écartées dans la direction de la flèche O. Cet écartement correspond à une coopération entre les parties coudées 8 et les passages coudés 3 correspondants, ménagés dans le corps de montage 1. Les passages coudés 3 présentent à cet effet des segments obliques 3a contre lesquels viennent s'appuyer les parties coudées 8 forçant ainsi ces dernières à s'écarter, et par conséquent à libérer une traverse 30 solidaire par exemple d'un toit d'un véhicule. Chaque tige de liaison 5 s'étend à travers une fente 26 ménagée dans un accessoire 25 constitué par exemple par le fond d'une coque inférieure d'un coffre destiné à être monté sur le toit d'un véhicule.

Lorsque l'utilisateur actionne l'organe de serrage 15, c'est-à-dire qu'il tourne ce dernier autour de son axe Y-Y', la pièce d'entraînement 10, bloquée en rotation, est translatée vers le haut pour venir en appui contre la paroi supérieure et intérieure de l'organe de serrage 15. Les crochets 6 sont ainsi entraînés vers le haut, c'est-à-dire en direction du corps de montage 1. Dans une telle position, se sont les branches intermédiaires 5a droites qui traversent les passages coudés 3. Ce sont donc ces mêmes branches intermédiaires droites 5a qui viennent en appui contre des segments sensiblement verticaux 3b des passages coudés 3 respectifs. Une telle coopération force les tiges de liaison 5 et par conséquent les crochets 6 à se refermer c'est-à-dire à pivoter dans le sens de la flèche F. Les crochets 6, et par conséquent également les tiges de liaison 5 viennent ainsi enserrer latéralement et verticalement la traverse 30. Tout jeu horizontal et vertical est ainsi ratrappé par le dispositif de fixation conforme à l'invention.

Les perçages 20 sont avantageusement prévus pour positionner de façon stable les dispositifs de fixation par rapport aux positions des traverses 30. Des moyens d'immobilisation connus en tant que tels sont ainsi engagés à travers les perçages 20.

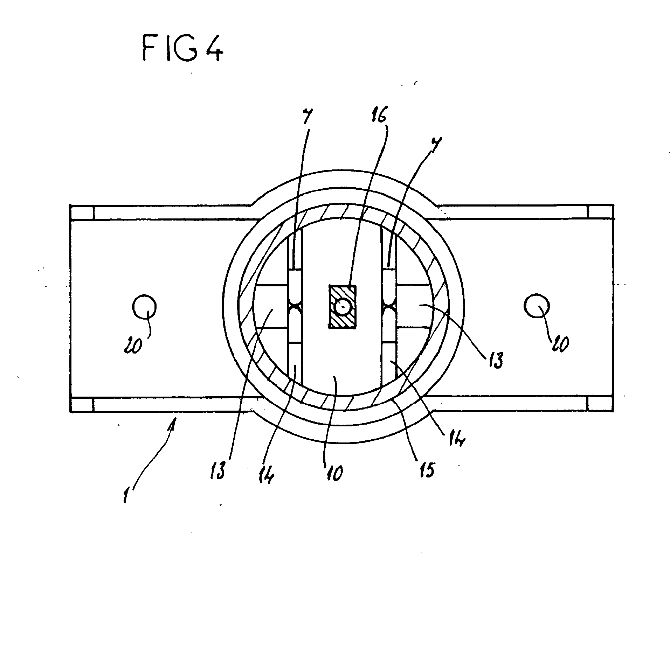

La figure 4 est une coupe selon la ligne IV-IV de la figure 2 et montre notamment le positionnement des extrémités recourbées 7 dans les gorges d'appui correspondantes 14 ménagées dans la pièce d'entraînement 10.

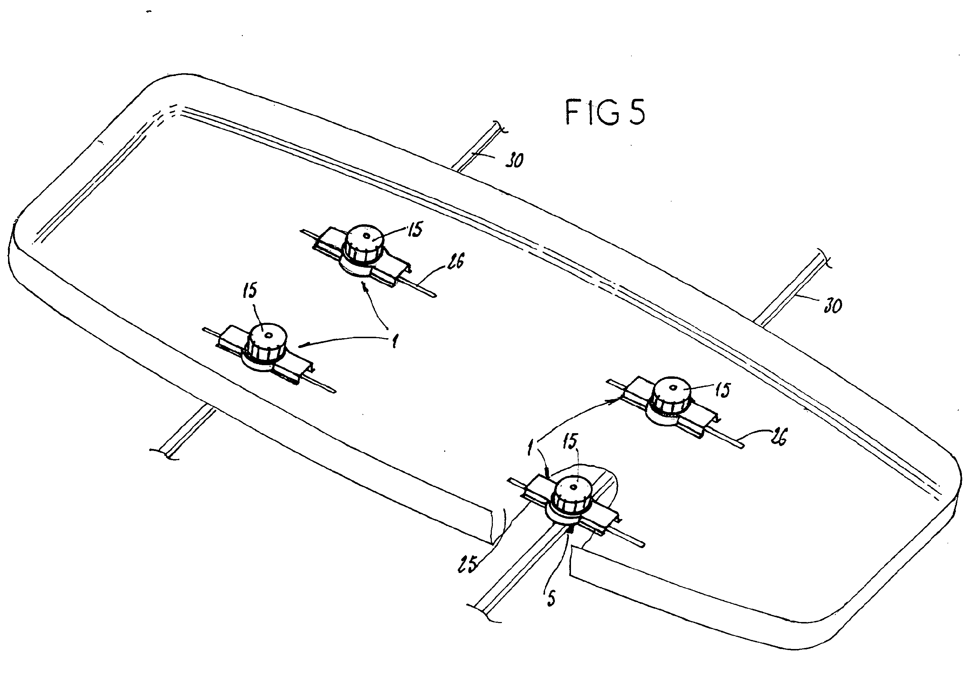

La figure 5 montre les dispositifs de fixation conformes à l'invention montés sur le fond 25 d'une demi-coque d'un coffre pour voiture. Le fond 25 est pourvu de fentes 26 sur lesquelles sont positionné et le cas échéant immobilisés lesdits dispositifs de fixation.

La demi-coque inférieure du coffre peut ainsi être adaptée à des espacements variables entre les traverses 30 solidaires du toit d'un véhicule, et ce de façon extrêmement simple. Il suffit en effet de faire coulisser les dispositifs de fixation le long des fentes 26 et aucun outillage spécial n'est nécessaire à cette fin.

## Revendications

1. Dispositif de fixation d'un accessoire (25), tel qu'un coffre de toit, sur des barres (30), telles que des barres de toit d'un véhicule automobile, comportant:
- des moyens de liaison (5, 6) traversant un corps de montage (1) et étant déplaçables par translation selon une direction sensiblement orthogonale à l'accessoire (25),
- un organe de serrage (15) associé au corps de montage (1) et agissant sur les moyens de liaison (5, 6) par l'intermédiaire de moyens d'actionnement (10, 15, 16) de manière à déplacer lesdits moyens de liaison (5, 6) selon ladite direction sensiblement orthogonale,
**caractérisé en ce que** le corps de montage (1) est apte à reposer sur une partie de l'accessoire (25) à fixer,
**en ce que** les moyens de liaison (5, 6) sont destinés à traverser une ouverture (26) du type fente ménagée dans ladite partie de l'accessoire (25) et comprennent deux crochets (6) en regard l'un de l'autre, formés à l'une des extrémités de tiges de liaison (5), l'autre extrémité (7) étant reliée aux moyens d'actionnement (10, 15, 16)
et **en ce que** le dispositif de fixation comporte des moyens d'actionnement complémentaires (3, 8) pour pivoter les moyens de liaison (5, 6) de manière à obtenir un rapprochement ou un écartement latéral de ceux-ci, correspondant respectivement à un serrage ou un desserrage, et ce simultanément au déplacement par translation desdits moyens de liaison (5, 6).

2. Dispositif de fixation selon la revendication 1, **caractérisé en ce que** les moyens d'actionnement comprennent :
- une pièce d'entraînement (10) pourvue d'un filetage extérieur (11) et sur laquelle est montée l'autre extrémité (7) des tiges de liaison (5), ladite pièce d'entraînement (10) étant mobile en translation selon une direction sensiblement orthogonale par rapport au corps de montage (1),
- une tige de maintien (16) retenant l'organe de serrage (15) sur le corps de montage (1), traversant la pièce d'entraînement (10) et bloquant cette dernière en rotation, ledit organe de serrage (15) étant monté mobile en rotation sur ladite tige de maintien (16),
- un taraudage (15b) ménagé dans l'organe de serrage (15) et engagé sur le filetage extérieur (11) de la pièce d'entraînement (10) de manière à faire coulisser cette dernière le long de la tige de maintien (16) lors d'une rotation de l'organe de serrage (15).

3. Dispositif de fixation selon la revendication 2, **caractérisé en ce que** les moyens d'actionnement complémentaires comprennent :
- des passages coudés (3) ménagés dans le corps de montage (1) et traversés par les tiges de liaison (5),
- et des parties coudées (8) sur les tiges de liaison (5), coopérant avec les passages coudés (3), de manière à entraîner un rapprochement (f) ou un écartement (o) desdites tiges de liaison (5), en fonction de la position de la pièce d'entraînement.

4. Dispositif de fixation selon la revendication 2 ou 3 **caractérisé en ce que** l'organe de serrage (15) est un bouchon taraudé.

5. Dispositif de fixation selon l'une quelconque des revendications 1 à 4, **caractérisé en ce que** l'accessoire (25) est un fond d'une demi-coque inférieure d'un coffre pour véhicule.

6. Dispositif de fixation selon l'une quelconque des revendications 1 à 5, **caractérisé en ce que** les crochets (6) sont destinés à venir en prise sur des barres transversales (30) solidaires d'un toit de véhicule.

7. Coffre destiné à être fixé sur le toit d'un véhicule pourvu de barres transversales, comportant une demi-coque inférieure dont le fond est équipé d'au moins deux dispositifs de fixation conforme à l'une quelconque des revendications 1 à 4.

8. Coffre destiné à être fixé sur le châssis d'un deux-roues, du type moto ou cyclomoteur, comportant une demi-coque inférieure dont le fond est équipé d'au moins deux dispositifs de fixation conforme à l'une quelconque des revendications 1 à 4.

9. Coffre selon la revendication 8 ou 9, **caractérisé en ce que** chaque dispositif de fixation est susceptible, en position dite "desserrée", de coulisser le long de l'ouverture ménagée dans le fond et peut être immobilisé en position dite "serrée", sur ledit fond par un actionnement de l'organe de serrage (15).

## Claims

1. Device for fastening an accessory (25), such as a roof box, to bars (30), such as roof bars of a motor vehicle, comprising:
- connecting means (5, 6) which pass through a mounting body (1) and are able to be moved by translation in a direction which is substantially orthogonal to the accessory (25),
- a clamping element (15) associated with the mounting body (1) and acting on the connecting means (5, 6) by way of activating means (10, 15, 16) so as to move said connecting means (5, 6) in said substantially orthogonal direction,
**characterized in that** the mounting body (1) is able to rest on part of the accessory (25) to be fastened,
**in that** the connecting means (5, 6) are intended to pass through a slot-type opening (26) made in said part of the accessory (25) and comprise two hooks (6) which face one another and are formed at one of the ends of connecting rods (5), the other end (7) being connected to the activating means (10, 15, 16),
and **in that** the fastening device comprises additional actuating means (3, 8) for pivoting the connecting means (5, 6) so as to bring them together or move them apart laterally, corresponding to a respective tightening or loosening operation, this taking place simultaneously with the translational movement of said connecting means (5, 6).

2. Fastening device according to Claim 1,
**characterized in that** the actuating means comprise:
- a drive part (10) provided with an external thread (11) and on which the other end (7) of the connecting rods (5) is mounted, said drive part (10) being able to move translationally in a substantially orthogonal direction with respect to the mounting body (1),
- a retaining rod (16) which retains the clamping element (15) on the mounting body (1), passes through the drive part (10) and prevents the latter from rotating, said clamping element (15) being mounted to rotate on said retaining rod (16),
- an internal thread (15b) made in the clamping element (15) and engaging with the external thread (11) of the drive part (10) so as to cause the latter to slide along the retaining rod (16) when the clamping element (15) is rotated.

3. Fastening device according to Claim 2,
**characterized in that** the additional actuating means comprise:
- kinked passages (3) formed in the mounting body (1) and traversed by the connecting rods (5),
- and kinked parts (8) on the connecting rods (5), which interact with the kinked passages (3) so as to cause said connecting rods (5) to be brought together (f) or moved apart (o), depending on the position of the drive part.

4. Fastening device according to Claim 2 or 3, **characterized in that** the clamping element (15) is an internally threaded cap.

5. Fastening device according to any one of Claims 1 to 4, **characterized in that** the accessory (25) is the bottom of a lower shell half of a box for a vehicle.

6. Fastening device according to any one of Claims 1 to 5, **characterized in that** the hooks (6) are intended to engage with crossbars (30) fixed to a vehicle roof.

7. Box intended to be fastened to the roof of a vehicle provided with crossbars, comprising a lower shell half whose bottom is equipped with at least two fastening devices according to any one of Claims 1 to 4.

8. Box intended to be fastened to the chassis of a two-wheeled vehicle of the motorbike or moped type, comprising a lower shell half whose bottom is equipped with at least two fastening devices according to any one of Claims 1 to 4.

9. Box according to Claim 7 or 8, **characterized in that** each fastening device is able, in the "loosened" position, to slide along the opening made in the bottom and can be immobilized, in the "tightened" position, on said bottom by actuating the clamping element (15).

## Patentansprüche

1. Vorrichtung zur Befestigung eines Zubehörs (25), wie beispielsweise einer Dachbox, auf Stangen (30), wie beispielsweise Dachstangen eines Kraftfahrzeugs, umfassend:
- Verbindungsmittel (5, 6), die einen Montagekörper (1) durchqueren und durch Translation in im Wesentlichen orthogonale Richtung zum Zubehör (25) verschiebbar sind,
- ein Klemmelement (15), das mit dem Montagekörper (1) verbunden ist und auf die Verbindungsmittel (5, 6) über Betätigungsmittel (10, 15, 16) einwirkt, um die Verbindungsmittel (5, 6) in die im Wesentlichen orthogonale Richtung zu verschieben,
**dadurch gekennzeichnet, dass** der Montagekörper (1) auf einem Teil des zu befestigenden Zubehörs (25) liegen kann, dass die Verbindungsmittel (5, 6) dazu bestimmt sind, durch eine Öffnung (26) vom Typ Schlitz hindurchzugehen, der in dem Teil des Zubehörs (25) vorgesehen ist, und zwei einander gegenüberliegende Haken (6) umfassen, die an einem der Enden der Verinbungsstangen (5) ausgebildet sind, wobei das andere Ende (7) mit den Betätigungsmitteln (10, 15, 16) verbunden ist,
und dass die Befestigungsvorrichtung komplementäre Betätigungsmittel (3, 8) umfasst, um die Verbindungsmittel (5, 6) zu schwenken, um eine Annäherung oder eine seitliche Entfernung derselben zu erzielen, was einem Festklemmen bzw. einem Lösen entspricht, und zwar gleichzeitig mit der Verschiebung der Verbindungsmittel (5, 6) durch Translation.

2. Befestigungsvorrichtung nach Anspruch 1, **dadurch gekennzeichnet, dass** die Betätigungsmittel umfassen:
- einen Antriebsteil (10), der mit einem Außengewinde (11) versehen ist und auf dem das andere Ende (7) der Verbindungsstangen (5) befestigt ist, wobei der Antriebsteil (10) in Translation in eine im Wesentlichen zum Montagekörper (1) orthogonale Richtung beweglich ist,
- eine Haltestange (16), die das Klemmelement (15) auf dem Montagekörper (1) hält, durch den Antriebsteil (10) hindurchgeht und diesen letztgenannten in Drehung feststellt, wobei das Klemmelement (15) in Drehung auf der Haltestange (16) beweglich ist,
- ein Gewinde (15b), das in dem Klemmelement (15) vorgesehen ist und auf dem Außengewinde (11) des Antriebsteils (10) im Eingriff steht, um diesen letztgenannten entlang der Haltestange (16) bei einer Drehung des Klemmelements (15) gleiten zu lassen.

3. Befestigungsvorrichtung nach Anspruch 2, **dadurch gekennzeichnet, dass** die komplementären Betätigungsmittel umfassen:
- geknickte Durchgänge (3), die im Montagekörper (1) vorgesehen sind und von den Verbindungsstangen (5) durchquert werden,
- und geknickte Teile (8) auf den Verbindungsstangen (5), die mit den geknickten Durchgängen (3) zusammenwirken, um eine Annäherung (f) oder eine Entfernung (o) der Verbindungsstangen (5) in Abhängigkeit von der Position des Antriebsteils zu steuern.

4. Befestigungsvorrichtung nach Anspruch 2 oder 3, **dadurch gekennzeichnet, dass** das Klemmelement (15) ein Gewindestopfen ist.

5. Befestigungsvorrichtung nach einem der Ansprüche 1 bis 4, **dadurch gekennzeichnet, dass** das Zubehör (25) ein Boden einer unteren Halbschale einer Box für ein Fahrzeug ist.

6. Befestigungsvorrichtung nach einem der Ansprüche 1 bis 5, **dadurch gekennzeichnet, dass** die Haken (6) dazu bestimmt sind, auf Querstangen (30), die mit einem Fahrzeugdach verbunden sind, einzugreifen.

7. Box, die dazu bestimmt ist, auf dem Dach eines Fahrzeugs befestigt zu werden, das mit Querstangen versehen ist, umfassend eine untere Halbschale, deren Boden mit mindestens zwei Befestigungsvorrichtungen nach einem der Ansprüche 1 bis 4 versehen ist.

8. Box, die dazu bestimmt ist, auf dem Gestell eines Zweirades vom Typ Motorrad oder Moped befestigt zu werden, umfassend eine untere Halbschale, deren Boden mit mindestens zwei Befestigungsvorrichtungen nach einem der Ansprüche 1 bis 4 versehen ist.

9. Box nach Anspruch 7 oder 8, **dadurch gekennzeichnet, dass** jede Befestigungsvorrichtung in der so genannten "gelösten" Position entlang der Öffnung gleiten kann, die im Boden vorgesehen ist, und in der so genannten "festgeklemmten" Position am Boden durch eine Betätigung des Klemmelements (15) festgestellt werden kann.
